# EUROPEAN PATENT SPECIFICATION

(11) **EP 1 231 449 B1**
(45) Date of publication and mention of the grant of the patent: **03.12.2003**
(21) Application number: 02391001.1
(22) Date of filing: 12.02.2002
(51) Int. Cl.: F28F 9/04

(54) **Heat exchanger and fitting**
Wärmetauscher und Anschluss
Echangeur de chaleur et raccord

(30) Priority: 12.02.2001 LU 90729
(43) Date of publication of application: 14.08.2002
(73) Proprietor: Delphi Technologies, Inc., Troy, MI 48007 (US)
(72) Inventor: Fourile, Roger, 08200 Wadelincourt (FR); Appert, Stéphane, 51360 Prunay (FR); Charlot, Hervé, 57100 Thionville (FR)
(74) Representative: Beissel, Jean

(56) References cited:
- DE-U- 9 405 182
- FR-A- 2 189 142
- US-A- 4 697 831

## Description

This invention relates in general to heat exchangers, e.g. for use in motor vehicle air conditioning systems, and in particular to a fitting for such a heat exchanger.

It is known to fabricate motor vehicle heat exchangers, such as condensers, by forming various condenser components of aluminum alloy materials having a brazing clad. In one type of heat exchanger, these components include two header tanks or manifolds, which are aligned in a parallel arrangement, flow tubes which extend in parallel between the two header tanks or manifolds, and fins which are placed between the tubes for enhancing the heat transfer capacity of the flow tubes. These various condenser components are typically assembled and secured to an assembly fixture to form a condenser brazing assembly, which is run through a brazing furnace to sealingly secure the various condenser components together.

The heat exchanger further comprises fittings to connect refrigerant flow lines. These fittings, e.g. threaded fittings or mini-block fittings, are mounted on the tanks or manifolds of the heat exchanger by a welding or brazing operation. Prior to the brazing or welding operation, these fittings have to be positioned and held in place at the appropriate location on the tank, i.e. in axial alignment with an opening of said tank. This auxiliary fixing is usually achieved by tack-welding the fitting to the tank or by fixing the fittings by means of auxiliary fasteners such as springs or wires etc..

It is clear, that the auxiliary fixing by tack-welding requires an expensive welding equipment in order to ensure the quality of the auxiliary fixing. On the other hand, the positioning of auxiliary fasteners represents a time consuming assembly step which reduces the productivity of the entire assembly line. Furthermore the use of auxiliary fasteners increases the number of individual parts to be provided at the assembly line.

French patent application FR-A-2 189 142 discloses a heat exchanger, wherein a fitting comprises a mounting end, which is provided with capillary channels in the form of ribs, protuberances or corrugations on that portion of the fitting. The mounting end is dimensioned in such a way that the engagement of the fitting in the opening of the tank wall is an easy clearance fit or a slight friction fit but such that the ribs and corrugations are not destroyed upon engagement.

### Object of the invention

The object of the present invention is to provide a fitting for a heat exchanger, which does not require auxiliary fixing.

### General description of the invention

This object is achieved by a fitting for a heat exchanger according to claim 1. The fitting comprises a connecting end for connecting a refrigerant flow line and a mounting end for mounting said fitting in axial alignment with an opening in a wall of said heat exchanger. Said mounting end of said fitting is dimensioned so as to be frictionally engageable into said opening of said heat exchanger. According to the invention the fitting preferably comprises outwardly extending deformable projections on a peripheral outer surface of said mounting end, for being deformed during the insertion of the mounting end into the opening of the said heat exchanger and for gripping into an inner peripheral surface of said opening.

In order to mount the fitting onto the heat exchanger, the fitting may be simply inserted into the opening of the wall of the heat exchanger, e.g. in the tank or manifold of the heat exchanger. The mounting end of the fitting being properly dimensioned, the fitting is held in place by physical interference between the outer peripheral surface of the mounting end of the fitting and the inner peripheral surface of the opening in the wall.

The projections increase the friction between the mounting end of the fitting and the wall of the heat exchanger. The projections are deformed during the insertion of the mounting end of the fitting into the opening, thus increasing the radial forces acting on the inner peripheral surface of said opening.

It follows that no auxiliary fixing is necessary in order to hold the fitting in place. It follows that immediately after positioning the fitting in this way, the heat exchanger can run through the brazing furnace to sealingly secure the various components together.

Since neither additional parts nor expensive equipment are required for auxiliary fixing the fitting onto the heat exchanger, the overall cost of assembly operation drops down. The simple operation of inserting the fitting into the opening reduces the time for positioning the fitting at the required position, thus increasing the productivity of the assembly line. Furthermore the correct position of the fitting on the tank or manifold being automatically given, the overall quality of the assembly increases and the reject rate diminishes. It should be noted, that the presence of deformable projections also reduces the tolerance requirements in the production of the fittings. In fact, these projections may compensate to a certain extent for dimension tolerances of the mounting end of the fitting. Finally, the insertion of the mounting end into the opening of the heat exchanger ensures a very high robustness of the assembly after brazing.

The present invention also relates to a heat exchanger comprising the new fitting. Such an heat exchanger comprises at least one tank or manifold and at least one fitting for connecting a refrigerant flow line to said heat exchanger. The fitting comprises a connecting end for connecting a refrigerant flow line and a mounting end for mounting said fitting in axial alignment with an opening in a wall of said tank. Said mounting end of said fitting is dimensioned in such a way, that said mounting end is frictionally engageable into said opening. According to the invention, the fitting preferably comprises outwardly extending projections on a peripheral outer surface of said mounting end, for being deformed during the insertion of the mounting end into the opening of the said heat exchanger and for gripping into an inner peripheral surface of said opening. The projections are deformed during the insertion of the mounting end of the fitting into the opening, thus increasing the radial forces acting on the inner peripheral surface of said opening. It should be noted, that the presence of deformable projections also reduces the tolerance requirements in the production of the fittings. In fact, these projections may compensate to a certain extent for dimension tolerances of the mounting end of the fitting.

The projections may comprise peripheral ribs having a saw tooth section. Such ribs may be easily obtained by appropriate machining of the fitting. On the one hand, the saw tooth section of the ribs advantageously facilitate the insertion of the fitting into the opening and on the other hand provide a very effective frictional engagement with the wall of the heat exchanger.

The one skilled in the art will be aware, that the present invention is applicable to any type of fitting, such as e.g. threaded fittings or mini-block fittings.

It will be appreciated, that the fitting according to the present invention simplifies the assembly of the heat exchanger. In fact, a method for mounting a fitting onto a heat exchanger, comprises the steps of
providing an opening in a wall of said heat exchanger,
providing a fitting comprising a mounting end, said mounting end of said fitting being dimensioned so as to be frictionally engageable into said opening of said heat exchanger,
inserting said mounting end of said fitting into said opening of said wall of said heat exchanger, whereby said mounting end is frictionally engaged in said opening of said wall, and
brazing said fitting onto said wall at the periphery of said opening.

This method uses a minimum of assembly steps, thus reducing the overall assembly costs for the heat exchanger and at the same time increasing the quality of the fabricated assembly.

### Detailed description with respect to the figures

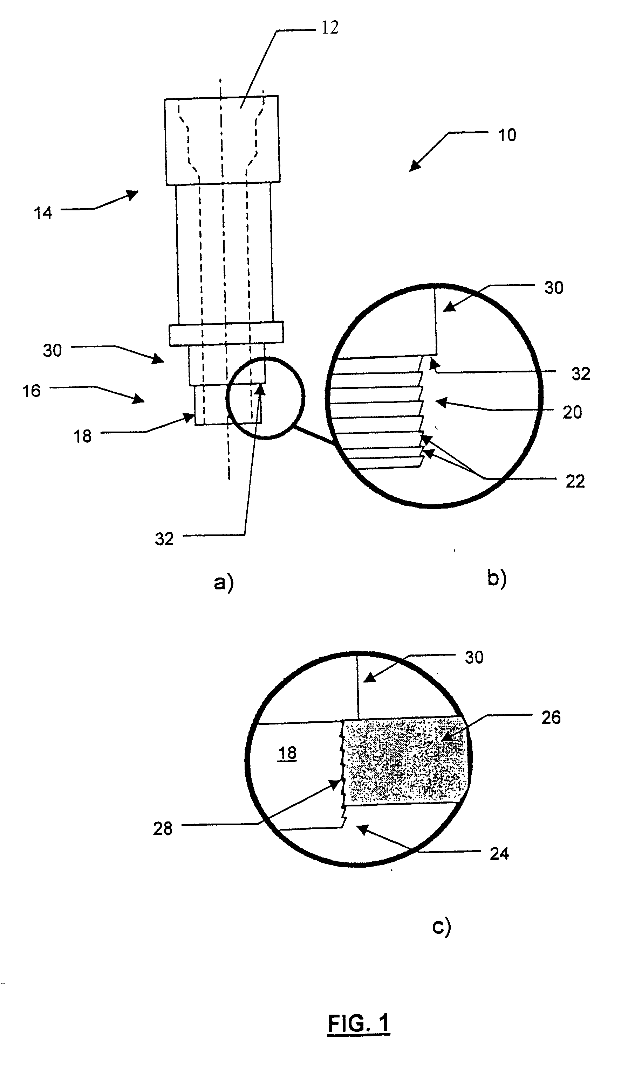

The present invention will be more apparent from the following description of a not limiting embodiment with reference to the attached drawing. Fig. 1 generally shows a side view of a fitting for a heat exchanger (a), an enlarged view of the mounting end (b), and an enlarged view of the mounting end after insertion into the wall of the heat exchanger (c).

An embodiment of a fitting 10 is shown in Fig. 1 a). The fitting comprises a generally tubular shape with an inner channel 12 formed therein. A connection end 14 of the fitting 10 comprises appropriate means for securely connecting a refrigerant line (not shown) to said fitting 10. These can e.g. comprise a threading or a portion having a reduced diameter for fastening the line by means of a hose clamp or the like.

A mounting end 16 for mounting the fitting on a manifold or header tank of an heat exchanger is dimensioned so as to be insertable into an opening in the wall of the heat exchanger. The diameter of the insertable mounting end is chosen in such a way, that the mounting end is frictionally engaged into said opening.

In order to enhance the engagement of the mounting end in the opening, the outer peripheral surface 18 of the mounting end is preferably provided with a sawtooth structure 20 (see Fig. 1 a). In the shown embodiment, this structure comprises several peripheral ribs 22 having a saw tooth section. This structure can be easily obtained by appropriate machining of the fitting.

During insertion of the fitting 10 into the opening 24 of the manifold wall 26, the tips of the sawtooth structure 20 are deformed, thereby engaging the inner peripheral surface 28 of the opening 24. This is shown in Fig. 1 c). It should be noted, that the presence of deformable projections also reduces the tolerance requirements in the production of the fittings. In fact, these projections may compensate to a certain extent for dimension tolerances of the mounting end of the fitting.

As further shown in Fig. 1, the mounting end 16 has a smaller diameter than the adjacent part 30 of the fitting. It follows, that the lower axial surface 32 of the portion 30 of the fitting forms a stop face for limiting the insertion of the fitting.

## Claims

1. Combination of fitting and a heat exchanger, said fitting (10) comprising a connecting end (14) for connecting a refrigerant flow line and a mounting end (16) for mounting said fitting (10) in axial alignment with an opening (24) in a wall (26) of said heat exchanger, said mounting end (16) of said fitting (10) being dimensioned so as to be frictionally engageable into said opening (24) of said heat exchanger, **characterized by** outwardly extending deformable projections (22) on a peripheral outer surface (18) of said mounting end (16), for being deformed during the insertion of the mounting end (16) into the opening (24) of the said heat exchanger and for gripping into an inner peripheral surface (28) of said opening (24).

2. Combination of fitting and heat exchanger according to claim 1, **characterized in that** said projections (22) comprise peripheral ribs having a saw tooth section (20).

3. Heat exchanger, comprising at least one tank and at least one fitting (10) for connecting a refrigerant flow line to said heat exchanger, wherein said fitting (10) comprises a connecting end (14) for connecting a refrigerant flow line and a mounting end (16) for mounting said fitting (10) in axial alignment with an opening (24) in a wall (26) of said tank, said mounting end (16) of said fitting (10) being dimensioned in such a way, that said mounting end (16) is frictionally engageable into said opening (24), **characterized in that** said fitting (10) comprises outwardly extending deformable projections (22) on a peripheral outer surface (18) of said mounting end (16), for being deformed during the insertion of the mounting end (16) into the opening (24) of the said heat exchanger and for gripping into an inner peripheral surface (28) of said opening (24).

4. Heat exchanger according to claim 3, **characterized in that** said projections (22) comprise peripheral ribs having a saw tooth section (20).

5. Heat exchanger according to any one of claims 3 to 4, **characterized in that** said fitting (10) is a threaded fitting or a mini-block fitting.

6. Method for mounting a fitting (10) onto a heat exchanger, comprising the steps of
providing an opening (24) in a wall (26) of said heat exchanger,
providing a fitting (10) comprising a mounting end (16), said mounting end (16) of said fitting (10) being dimensioned so as to be frictionally engageable into said opening (24) of said heat exchanger, said fitting (10) comprising outwardly extending deformable projections (22) on a peripheral outer surface (18) of said mounting end (16),
inserting said mounting end (16) of said fitting (10) into said opening (24) of said wall (26) of said heat exchanger, whereby said projections (22) are deformed for gripping into an inner peripheral surface (28) of said opening (24) so that said mounting end (16) is frictionally engaged in said opening (24) of said wall (26), and
brazing said fitting (10) onto said wall (26) at the periphery of said opening (24).

## Patentansprüche

1. Kombination aus Anschluss und Wärmetauscher, wobei der Anschluss (10) umfasst:
ein Verbindungsendstück (14), um eine Kältemittelleitung anzuschließen, und ein Einbauendstück (16), um den Anschluss (10) axial ausgerichtet in eine Öffnung (24) einer Wand (26) des Wärmetauschers einzubauen, wobei das Einbauendstück (16) des Anschlusses (10) so bemessen ist, dass es reibschlüssig in die Öffnung (24) des Wärmetauschers eingreifen kann;
**gekennzeichnet durch**
nach außen überstehende, verformbare Vorsprünge (22) an einer äußeren Randfläche (18) des Einbauendstücks (16), die während des Einsetzens des Einbauendstücks (16) in die Öffnung (24) des Wärmetauschers verformt werden und in eine innere Randfläche (28) der Öffnung (24) eingreifen.

2. Kombination aus Anschluss und Wärmetauscher nach Anspruch 1, **dadurch gekennzeichnet, dass** die Vorsprünge (22) Randrippen mit einem Sägezahnprofil (20) umfassen.

3. Wärmetauscher, umfassend mindestens einen Wasserkasten und mindestens einen Anschluss (10), um eine Kältemittelleitung mit dem Wärmetauscher zu verbinden, wobei der Anschluss (10) umfasst: ein Verbindungsendstück (14), um eine Kältemittelleitung anzuschließen, und ein Einbauendstück (16), um den Anschluss (10) axial ausgerichtet in eine Öffnung (24) einer Wand (26) des Wasserkastens einzubauen, wobei das Einbauendstück (16) des Anschlusses (10) so bemessen ist, dass es reibschlüssig in die Öffnung (24) eingreifen kann;
**dadurch gekennzeichnet, dass**
der Anschluss (10) nach außen überstehende, verformbare Vorsprünge (22) an einer äußeren Randfläche (18) des Einbauendstücks (16) umfasst, die während des Einsetzens des Einbauendstücks (16) in die Öffnung (24) des Wärmetauschers verformt werden und in eine innere Randfläche (28) der Öffnung (24) eingreifen.

4. Wärmetauscher nach Anspruch 3, **dadurch gekennzeichnet, dass** die Vorsprünge (22) Randrippen mit einem Sägezahnprofil (20) umfassen.

5. Wärmetauscher nach irgendeinem der Ansprüche 3 oder 4, **dadurch gekennzeichnet, dass** der Anschluss (10) ein Gewinde- oder Miniblock-Anschluss ist.

6. Verfahren zur Montage eines Anschlusses (10) an einem Wärmetauscher, umfassend die Schritte zum
Bereitstellen einer Öffnung (24) in einer Wand (26) des Wärmetauschers;
Bereitstellen eines Anschlusses (10), der ein Einbauendstück (16) umfasst, wobei das Einbauendstück (16) des Anschlusses (10) so bemessen ist, dass es reibschlüssig in die Öffnung (24) des Wärmetauschers eingreifen kann, wobei der Anschluss (10) nach außen überstehende, verformbare Vorsprünge (22) an einer äußeren Randfläche (18) des Einbauendstücks (16) umfasst;
Einsetzen des Einbauendstücks (16) des Anschlusses (10) in die Öffnung (24) der Wand (26) des Wärmetauschers, wodurch die Vorsprünge (22) verformt werden, um in eine innere Randfläche (28) der Öffnung (24) einzugreifen, so dass das Einbauendstück (16) reibschlüssig in die Öffnung (24) der Wand (26) eingreift; und
Hartlöten des Anschlusses (10) an die Wand (26) am Rand der Öffnung (24).

## Revendications

1. Combinaison d'un raccord et d'un échangeur de chaleur, ledit raccord (10) comprenant une extrémité de raccord (14) pour raccorder une conduite d'écoulement de réfrigérant et une extrémité de montage (16) pour monter ledit raccord (10) en alignement axial avec une ouverture (24) dans une paroi (26) dudit échangeur de chaleur, ladite extrémité de montage (16) dudit raccord (10) étant dimensionnée de façon à pouvoir être engagée par frottement dans ladite ouverture (24) dudit échangeur de chaleur, **caractérisée par** des saillies déformables (22) s'étendant vers l'extérieur sur une surface périphérique extérieure (18) de ladite extrémité de montage (16), pour être déformées pendant l'insertion de l'extrémité de montage (16) dans l'ouverture (24) dudit échangeur de chaleur et pour s'accrocher dans une surface périphérique intérieure (28) de ladite ouverture (24).

2. Combinaison d'un raccord et d'un échangeur de chaleur selon la revendication 1, **caractérisée en ce que** lesdites saillies (22) comprennent des nervures périphériques possédant une section en dent de scie (20).

3. Echangeur de chaleur comprenant au moins un réservoir et au moins un raccord (10) pour raccorder une conduite d'écoulement de réfrigérant audit échangeur de chaleur, dans lequel ledit raccord (10) comprend une extrémité de raccord (14) pour raccorder une conduite d'écoulement de réfrigérant et une extrémité de montage (16) pour monter ledit raccord (10) en alignement axial avec une ouverture (24) dans une paroi (26) dudit réservoir, ladite extrémité de montage (16) dudit raccord (10) étant dimensionnée de sorte que ladite extrémité de montage (16) peut être engagée par frottement dans ladite ouverture (24), **caractérisé en ce que** ledit raccord (10) comprend des saillies déformables (22) s'étendant vers l'extérieur sur une surface périphérique extérieure (18) de ladite extrémité de montage (16), pour être déformées pendant l'insertion de l'extrémité de montage (16) dans l'ouverture (24) dudit échangeur de chaleur et pour s'accrocher dans une surface périphérique intérieure (28) de ladite ouverture (24).

4. Echangeur de chaleur selon la revendication 3, **caractérisé en ce que** lesdites saillies (22) comprennent des nervures périphériques possédant une section en dent de scie (20).

5. Echangeur de chaleur selon l'une quelconque des revendications 3 à 4, **caractérisé en ce que** ledit raccord (10) est un raccord fileté ou un raccord mini-bloc.

6. Procédé de montage d'un raccord (10) sur un échangeur de chaleur, comprenant les étapes consistant à
prévoir une ouverture (24) dans une paroi (26) dudit échangeur de chaleur,
prévoir un raccord (10) comprenant une extrémité de montage (16), ladite extrémité de montage (16) dudit raccord (10) étant dimensionnée de façon à pouvoir être engagée par frottement dans ladite ouverture (24) dudit échangeur de chaleur, ledit raccord (10) comprenant des saillies déformables (22) s'étendant vers l'extérieur sur une surface périphérique extérieure (18) de ladite extrémité de montage (16),
insérer ladite extrémité de montage (16) dudit raccord (10) dans ladite ouverture (24) de ladite paroi (26) dudit échangeur de chaleur, ce par quoi lesdites saillies (22) sont déformées pour s'accrocher dans une surface périphérique intérieure (28) de ladite ouverture (24) de sorte que ladite extrémité de montage (16) est engagée par frottement dans ladite ouverture (24) de ladite paroi (26), et
braser ledit raccord (10) sur ladite paroi (26) à la périphérie de ladite ouverture (24).
